# EUROPEAN PATENT APPLICATION

(11) **EP 3 705 174 A1**
(43) Date of publication of application: **09.09.2020**
(21) Application number: 18872675.6
(22) Date of filing: 26.09.2018
(51) Int. Cl.: B01D 69/12, B01D 69/10

(54) **METHOD FOR MANUFACTURING MOLDED FILTER BODY**

(30) Priority: 30.10.2017 JP 2017209040
(71) Applicant: Shinshu University, Matsumoto-shi, Nagano 390-8621 (JP); Kotobuki Tsushou Co., Ltd., Kitakyushu-shi, Fukuoka 802-0836 (JP)
(72) Inventor: TAKAGI Toshio, Kitakyushu-shi Fukuoka 802-0042 (JP); SHIMIZU Yasushi, Kitakyushu-shi Fukuoka 8020836 (JP); KANEKO Katsumi, Nagano-shi Nagano 380-8553 (JP); MURATA Katsuyuki, Kitakyushu-shi Fukuoka 802-0836 (JP)
(74) Representative: Parker, Andrew James
(86) International application number: PCT/JP2018/035714
(87) International publication number: WO 2019/087624

(57) **Abstract**

The present disclosure describes a method of manufacturing a molded filter body, by which a molded filter body can be produced more easily.

A method of manufacturing a molded filter body having a layer of a filtering material includes: forming a layer of a support mixed with a template, on a surface of the layer of the filtering material; and forming water passage holes in the layer of the support by removing the template.

## Description

### Technical Field

The present disclosure relates to a method of manufacturing a molded filter body.

### Background Art

In recent years, as a filter for removing fine particles such as ions from water, another solution, or a gas, a molded filter body that employs graphene having fine filter water passage holes formed therein has been used (Patent Literature 1).

Since graphene is generally formed on the surface of a copper foil or the like by a chemical vapor deposition (CVD) method, conventionally, a transfer process of transferring graphene onto a desired support has been needed when graphene is used as a molded filter body. In the transfer process, PMMA is spin-coated on an exposed surface of graphene formed on a copper foil to form a thin protective film and then is dried, subsequently the resultant is floated, with the copper foil being arranged to face downward, on a Cu etching solution that has been heated to 50°C, and the copper foil is removed. Next, a thin film of PMMA and graphene is washed with ultrapure water and is scooped up so as to be mounted on a silicon substrate having a hydrophilized surface. Subsequently, the thin film is scooped up with a desired support formed from a resin or the like and is dried, and the protective film of PMMA is removed by alternately repeating immersion in acetone and immersion in IPA several times. Finally, the support and the graphene are dried, and thereby graphene can be transferred onto the support.

In such a conventional transfer process, chemicals and the like are consumed while time is taken, and thus productivity is low. Furthermore, there have been occasions in which very thin graphene is damaged in the course of forming or removing a coating on the surface of a layer of graphene, or scooping up or withdrawing a graphene layer with a silicon substrate or the like.

In order to manufacture a molded filter body without damaging graphene, Patent Literature 1 discloses a method of manufacturing a molded filter body including forming water passage holes in advance in a support using a biopsy trepan or the like, and sticking the support to graphene.

Furthermore, Patent Literature 2 discloses a method of manufacturing a molded filter body including forming a layer of a negative type photoresist as a support, subsequently exposing and developing a portion of the photoresist other than the portions where water passage holes are to be formed, and thereby forming water passage holes in the support.

### Citation List

### Patent Literature

Patent Literature 1: International Publication No. 2016/002509
Patent Literature 2: International Publication No. 2016/024506

### Summary of Invention

### Technical Problem

The present disclosure describes a method of manufacturing a molded filter body, by which a molded filter body can be produced more easily.

### Solution to Problem

The method of manufacturing a molded filter body according to one aspect of the present disclosure is a method of manufacturing a molded filter body having a layer of a filtering material, the method including forming a layer of a support mixed with a template on ta surface of a layer of a filtering material; and forming water passage holes in the layer of the support by removing the template.

### Advantageous Effects of Invention

According to the method of manufacturing a molded filter body related to the present disclosure, a molded filter body can be manufactured more easily.

### Brief Description of Drawings

FIG. 1(a) is a plan view illustrating an example method of manufacturing a molded filter body, and FIG. 1(b) is a cross-sectional view illustrating the example method of manufacturing a molded filter body.
FIG. 2 is an outline diagram for describing an example method of using a molded filter body.

### Description of Embodiments

Hereinbelow, an example of the embodiments related to the present disclosure will be described in more detail with reference to the drawings. In the following description, the same numerical reference will be used for the same elements or elements having the same function, and any overlapping description will not be repeated.

A molded filter body has a layer of a filtering material that removes foreign materials from a liquid such as water or a gas. The material of the filtering material may be nanocarbon (for example, graphene, carbon nanotubes, carbon nanoribbons, carbon nanohorns, graphene oxide, or the like); may be a substance exhibiting properties resembling graphene (for example, a hexagonal crystalline boron nitride (h-BN) film, a transition metal dichalcogenide having a Group 5 central metal, or the like); may be a Group 13 or Group 14 chalcogenide; may be a P, Sb, or Bi monoatomic film; or may be a perovskite-based nanosheet.

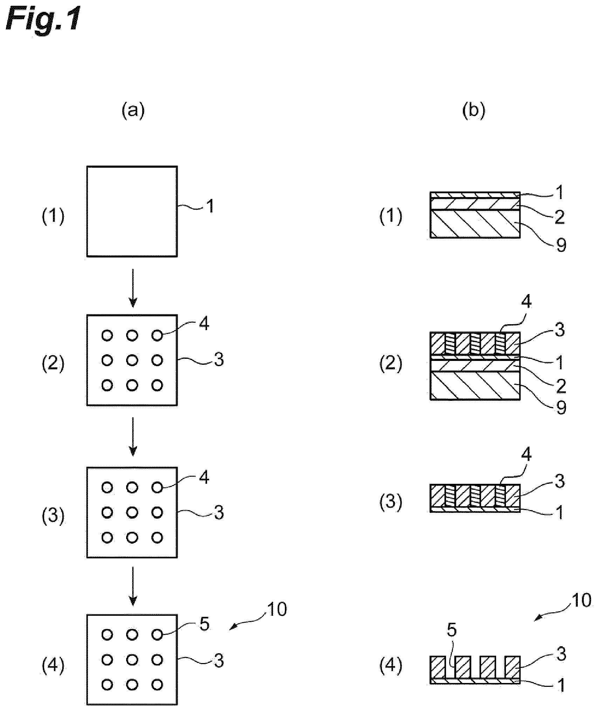

Hereinafter, a description will be given by taking a molded filter body 10 in the case of using graphene 1 as a filtering material as an example, with reference to FIG. 1. Meanwhile, in FIGS. 1(a) and 1(b), the reference numerals of (1) represent the time of initiation of the production of a molded filter body; the reference numerals of (2) represent the time of spin coating of a solution on a support 3; the reference numerals of (3) represent the time of removal of a copper foil 2; and the reference numerals of (4) represent the time of removal of a template 4 and punching of graphene 1.

As illustrated in FIG. 1(1), as the graphene 1, graphene 1 obtained by forming a copper foil 2 on a silicon substrate 9 and growing graphene on the copper foil 2 is used. For example, 1 µm of a copper foil 2 is formed on a 4-inch silicon wafer (silicon substrate 9) having a thickness of 300 µm by sputtering film formation, and a substrate is formed by cutting out the silicon wafer into a size of 1 cm².

The graphene 1 may be formed on a copper foil 2 by a CVD method under the conditions of 500 sccm of 50% hydrogen-argon balance, 1 sccm of methane, and 1,000°C for 10 minutes. The graphene 1 may be single-layer graphene or may be multilayer graphene. Furthermore, an assembly of graphene 1 and the copper foil 2 only, from which the silicon substrate has been removed in advance using a reagent, may also be used. In addition, a product in which the graphene 1 is retained on an initial substrate for graphene, which is formed from a material other than the copper foil 2, may also be used. It is desirable that the graphene 1 is a single crystal graphene having a large crystal size, which is single-layered. In the present embodiment, single layer graphene manufactured by Graphena Inc. was used as the graphene 1.

As illustrated in FIG. 1(2), the support 3 retaining the graphene 1 in the molded filter body 10 is formed by spin coating a polyimide precursor on the surface of the graphene 1. The polyimide precursor may be a resin having rigidity to the extent of being capable of supporting the graphene 1 and having high heat resistance. It is not necessary that the polyimide precursor is photosensitive. In the present embodiment, the support 3 is formed using "Semicofine SP-042" manufactured by Toray Industries, Inc. as the polyimide precursor. In addition to a polyimide resin, a bismaleimide triazine resin (BT resin), a benzocyclobutene resin (BCB resin), or a fluororesin can be used.

The polyimide precursor that forms the support 3 is mixed with a predetermined template 4. When the support 3 is stabilized and then the template 4 is removed, water passage holes 5 are formed in the support 3. For the template 4, a colloid using metal nanoparticles, such as a platinum colloid or a silver colloid; or nanoparticles of alumina, copper oxide, iron oxide, cobalt oxide, titanium oxide, or the like can be used. For example, an iron(II) oxide colloid and an iron(III) oxide colloid, which are inexpensive in price and are easily removable, may also be used as the template 4. Furthermore, regarding the template 4, it is preferable to use nanoparticles having a sufficiently smaller size than the size of the water passage holes 5 to be formed. In the present embodiment, an iron(II, III) oxide nanocolloid φ30 nm toluene solution (concentration 5 mg/mL) manufactured by Sigma-Aldrich Corporation was used as the template 4.

As illustrated in FIG. 1(2), in order to form a molded filter body 10, first, a support 3 is formed on the surface of graphene 1. A template 4 is mixed in advance into a solution of a polyimide precursor. Regarding the mixing ratio (volume ratio or weight ratio) and the mixing method, 3 mg of SP-042 was sufficiently kneaded with 300 µL of iron(II, III) oxide nanocolloid φ30 nm toluene solution per one-inch wafer, and the mixture was subjected to vacuum degassing for one hour.

A polyimide precursor solution is spin coated on the graphene 1 for 20 seconds at 2,000 rpm using a spin coater, and a support 3 having a thickness of 10 µm is formed. After spin coating is performed, soft baking is carried out for 10 minutes at 90°C using a hot plate, and the support 3 is stabilized. Furthermore, hard baking is performed for 10 minutes at 250°C using a hot plate, and the support 3 is cured.

Next, as illustrated in FIG 1(3), the silicon substrate 9 is removed using 25% tetramethylammonium hydroxide (TMAH), and the copper foil 2 on the graphene 1 is removed. Since the graphene 1 is destroyed when the copper foil 2 is mechanically peeled off, the copper foil 2 is removed by dissolving through etching. The graphene 1 and the support 3 are floated, with the surface of the copper foil 2 facing downward, on a Cu etching solution at 50°C, which is a mixed aqueous solution of 0.5 mol/l hydrochloric acid and 0.5 mol/l iron(III) chloride. Leaving the graphene 1 and the support 3 to stand for one hour; subsequently checking whether the copper foil 2 remains behind by visual inspection; performing etching for another 10 minutes if etching is insufficient; and checking by visual inspection, are repeated.

When it is confirmed that the copper foil 2 is completely removed, the graphene 1 and the support 3 are floated on ultrapure water, with the face of the graphene 1 facing downward. Subsequently, the same washing is performed two times by exchanging the ultrapure water, and the etching solution is removed.

Next, as illustrated in FIG. 1(4), the template 4 is removed, and water passage holes 5 are formed in the support 3. The graphene 1 and the support 3 are immersed in a 60% aqueous solution of ammonium thioglycolate at normal temperature for one hour or longer, and the template 4 formed from iron(II, III) oxides is dissolved. Subsequently, rinsing is performed for 10 minutes with ultrapure water, and the template 4 and ammonium thioglycolate are washed away. Thereby, water passage holes 5 are formed in the part where the template 4 was present. The size of the water passage holes 5 may be a size of about 50 nm to 1,000 nm at the penetration portion, and the openings may be about several micrometers (µm). The shape of the water passage holes 5 may be a mortar shape, in which the diameter decreases toward the side closer to the graphene 1.

Next, filter water passage holes (not illustrated in the diagram) for passing water are formed in the graphene 1. These filter water passage holes need to have a size through which water can pass but impurities or ions cannot pass. Forming the filter water passage holes in the graphene 1 is performed after the copper foil 2 is removed because the copper foil 2 serves as a catalyst and combusts the graphene 1 at the time of heating if the copper foil 2 is left behind.

Forming the filter water passage holes in the graphene 1 may also be carried out by heating the graphene 1 at a predetermined temperature and for a predetermined time in air. Regarding the term "in air" according to the present specification, the air is not limited to a mixed gas of about 20% of O₂ and about 80% of N₂, there are no limitations on the other incorporated gases as long as the gas includes 1% or more of O₂, and any mixed gases including rare gases and other gases are widely allowed.

The heating temperature at the time of forming the filter water passage holes in the graphene 1 may be about 160°C to 250°C. When the heating temperature is 160°C or higher, filter water passage holes can be effectively formed in the graphene 1. When the heating temperature is 250°C or lower, the support 3 is not damaged, and since the filter water passage holes are gradually and slowly opened and spread in the graphene 1, the size of the filter water passage holes can be controlled by the length of the heating time. Furthermore, when filter water passage holes are opened in air at 200°C to 250°C, cinders are not generated, and therefore, filter water passage holes having a uniform size can be opened while a clean surface is maintained. For example, when filter water passage holes are formed in a period of 20 hours in air at 200°C, a molded filter body 10 thus produced can be utilized as a filter for removing fine particles such as ions from water, another solution, or a gas, such as for removing salts from the seawater to obtain fresh water.

Furthermore, the predetermined time refers to a time of bringing an effect of forming filter water passage holes in the graphene 1 in a state of maintaining an atmosphere at 160°C to 250°C. A molded filter body 10 in which filter water passage holes are formed in the graphene 1 as such, can be made to have desired ion selectivity by controlling the temperature and time of low-temperature heating.

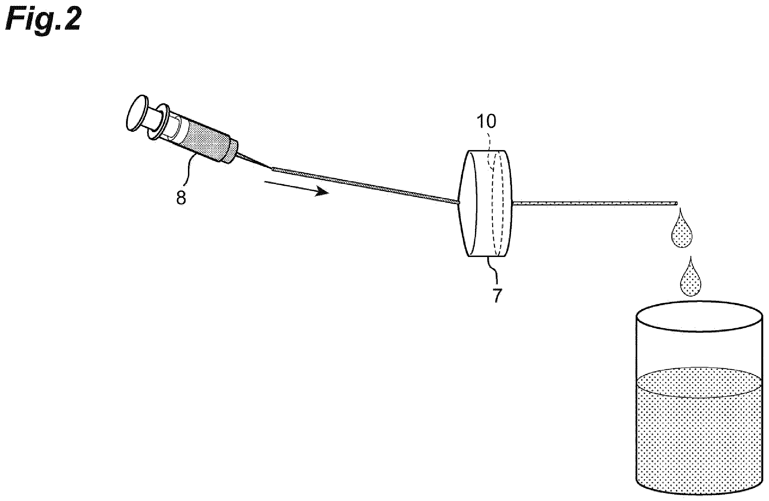

The molded filter body 10 produced as such can be used, for example, as illustrated in FIG. 2, as a filter for a water purifying apparatus using a membrane filter. For example, a molded filter body is cut into a 1/2-inch circle shape using a craft punch (manufactured by Carl Jimuki Co., Ltd. or the like). This molded filter body is attached at the downstream of a 1/2-inch membrane filter and is mounted on a membrane filter holder 7, with the support 3 of the molded filter body being arranged to face upstream and the layer of the graphene 1 being arranged to face downstream. As the membrane filter, for example, "Isopore GTTP" (pore size 0.2 µm) manufactured by Merck KGaA, which is a membrane filter made of polycarbonate, can be used. As the membrane filter holder 7, for example, "Swinnex" manufactured by Merck KGaA can be used. In order to perform filtration of a solution using such a water purifying apparatus, a solution to be filtered (for example, seawater or the like) is introduced into a syringe 8, the syringe 8 is connected to a membrane filter holder 7, and the solution is filtered by pushing the syringe 8. Thereby, water from which particular impurities or ions have been removed can be obtained.

In the above-described embodiment, since the process includes forming a layer of a support 3 mixed with a template 4 on the surface of a layer of graphene 1; and forming water passage holes 5 in the layer of the support 3 by removing the template 4, the raw material of the support 3 is not limited to special materials. Therefore, for example, a molded filter body 10 having a highly durable and highly heat-resistant polyimide as the support 3 can be produced easily. Furthermore, since water passage holes 5 can be easily formed in the support 3 without requiring any complicated processes, a molded filter body 10 can be produced easily at low cost.

Regarding the timing for forming the filter water passage holes in the graphene 1, the timing is not limited after a layer of the support 3 is formed on the graphene 1 and the template 4 is removed from the support 3 as in the case of the present embodiment. If possible, the timing may be before forming the layer of the support 3 on the graphene 1, may be somewhere between formation of the layer of the support 3 and removal of the template 4, or may be any other time point.

Furthermore, in the present embodiment, the copper foil 2 is removed using a Cu etching solution after the template 4 is removed by means of ammonium thioglycolate; however, since the template 4 is also dissolved in the Cu etching solution, the template 4 and the copper foil 2 may be removed simultaneously using the Cu etching solution.

Moreover, the method of forming the filter water passage holes in the graphene 1 may be modified according to the size of the filter water passage holes that is to be formed. In addition to a method based on low-temperature heating of the present embodiment, a method based on high-temperature heating at 250°C or higher, or a method according to another chemical method may also be employed, and there are no particular limitations.

Also in the case of using nanocarbon such as carbon nanotubes, carbon nanoribbons, carbon nanohorns, or graphene oxide as the filtering material, the filter water passage holes can be formed according to heating or another chemical method, similarly to graphene. In a case in which a hexagonal crystalline boron nitride (h-BN) film, a transition metal dichalcogenide, Group 13 and Group 14 chalcogenides, P, Sb, and Bi monoatomic films, or a perovskite-based nanosheet is used as the filtering material, plasma etching is effective. In an h-BN film, when argon plasma etching is used, the etching rate is slow, and therefore, filter water passage holes can be opened by controlling the size. Also, for the films of transition metal dichalcogenides, Group 13 and Group 14 chalcogenides, and P, Sb, and Bi monoatomic films, argon plasma etching or reactive plasma etching using halogen is effective. For a perovskite-based nanosheet, reactive plasma etching in which the etching rate against perovskite is small is effective. Even in these cases, the timing for forming filter water passage holes in the filtering material is not particularly limited.

### Examples

Example 1. A method of manufacturing a molded filter body related to one example of the present disclosure is a method of manufacturing a molded filter body having a layer of a filtering material, and the method includes forming a layer of a support mixed with a template on a surface of the layer of the filtering material; and forming water passage holes in the layer of the support by removing the template.
Example 2. The method of Example 1 may further include forming filter water passage holes in the filtering material by heating the filtering material in air at a temperature of 160°C to 250°C.

### Reference Signs List

1: graphene, 2: copper foil, 3: support, 4: template, 5: water passage hole, 7: membrane filter holder, 8: syringe, 9: silicon substrate, 10: molded filter body.

## Claims

1. A method of manufacturing a molded filter body having a layer of a filtering material, the method comprising:
forming a layer of a support mixed with a template, on a surface of the layer of the filtering material; and
forming water passage holes in the layer of the support by removing the template.

2. The method according to claim 1, further comprising forming filter water passage holes in the filtering material by heating the filtering material in air at a temperature of 160°C to 250°C.
